# EUROPEAN PATENT SPECIFICATION

(11) **EP 2 053 240 B1**
(45) Date of publication and mention of the grant of the patent: **30.03.2011**
(21) Application number: 07075909.7
(22) Date of filing: 22.10.2007
(51) Int. Cl.: F03D 11/02, F03D 1/06

(54) **Wind turbine with boundary layer control**
Windenergieanlage mit Grenzschichtsteuerung
Éolienne avec contrôle de couche limite

(43) Date of publication of application: 29.04.2009
(73) Proprietor: Actiflow B.V., 2628 AL Delft (NL)
(72) Inventor: Campe, Roy, 2320 Hoogstraten (BE); Terry, Eric Louis Norbert, 2000 Antwerpen (BE)
(74) Representative: Houben, Christiaan Hein Willem Frans

(56) References cited:
- WO-A-00/50778
- WO-A-2007/045940
- US-A1- 2007 014 657

## Description

### BACKGROUND OF THE INVENTION

The present invention relates to a wind turbine comprising a rotor with turbine blades, and further comprising a boundary layer control system for the turbine blades.

The wind turbine industry is growing very rapidly. Due to the increasing prices of fossil fuels and due to environmental concerns, there is a growing demand for green energy. To ensure the lasting success of wind turbines and to meet the future requirements of wind turbines, lots of R&D is being carried out on all aspects of a wind turbine.

Considering modern horizontal-axis wind turbines, the goal of the R&D is maximizing the energy production of a wind turbine, divided by all production costs and operational costs of this wind turbine. In the past, most of the R&D budget went to structural development of the wind turbine blades and to the development of all mechanical and electrical components of a wind turbine. At this moment however, the aerodynamic optimization of wind turbine blades becomes more and more important. As the energy produced by a wind turbine is a direct function of the rotor diameter, large diameters are favorable for the overall energy production of a wind turbine. However, large rotor diameters require a high stiffness of the blades and require an active control method for the aerodynamic loads acting on the wind turbine blades. A sufficient stiffness is needed to avoid aerodynamic losses or even to avoid a tower strike due to high bending of the turbine blades. The active control of aerodynamic loads acting on wind turbine blades becomes increasingly important as the power captured from the wind by the rotor at high wind speeds far exceeds the limits set by the design strength of the rotor structure. This is especially true for large wind turbines, as the safety margins of the strength limits of the components become narrower with increasing turbine size. For instance US2004/057828 deals with the issue of tower strike with large wind turbines. From this publication, out-of-plane deflection measurements and strain gauge measurements are known to control a wind turbine. A controller uses the signal from the sensor to determine the risk of tower strike. The controller takes a necessary control action to prevent a tower strike. The control actions proposed are pitching blades, yawing the nacelle or stopping the turbine. In an aerodynamic optimization process two factors are important to maximize the energy production of a wind turbine: overall performance and active load control.

The overall performance of a horizontal-axis wind turbine can be improved by maximizing the lift to drag ratio of a wind turbine blade at different wind conditions and/or angles of attack. Even with an ideal airflow and lossless conversion, the ratio of extractable mechanical work to the power contained in the wind is limited to a value of 0.593. In practice, this theoretical maximum can not be reached because of different aerodynamic losses. Most of the aerodynamic losses are a result of the creation of a boundary layer on the wind turbine blade surface. By introducing boundary layer control techniques, the aerodynamic losses can be minimized, leading to higher energy production of the wind turbine.

Another possible improvement leading to a higher energy production and a higher efficiency of a modern horizontal-axis wind turbine is an active system to control the aerodynamic loads on a wind turbine blade. Wind turbines are subjected to significant unsteady loads resulting from wind shear, gusts, yaw misalignment and upwind turbine wakes, which significantly reduce the efficiency and the fatigue life of a wind turbine. Rotor stall has been identified as one of the key causes of inefficiency and fatigue damage. Moreover, the design of increasingly larger wind turbines is limited as rotor power and mass output are proportional to the second and third power of the wind turbine diameter respectively. To improve efficiency and fatigue life of existing and future wind turbines, it is desired to achieve effective boundary layer control on wind turbine blades.

From GB 2186033, a boundary layer control system for a wind turbine is known. GB 2186033 describes a wind turbine blade, having an internal pathway with an inlet through which air enters and flows along the pathway, and an outlet located adjacent and substantially parallel to the leading edge of the blade, the outlet being adapted to direct air flowing from the pathway over the blade surface towards the trailing edge of the blade thereby enhancing the aerodynamic lift experienced by the blades. The flow of air along the pathway to the outlet is controllable by centrifugally operable valves. By closing the valves when the rotor is in an overspeed condition and thereby decreasing the air flow through the pathway and the outlet, the air stream along the blade surface is deteriorated whereby the aerodynamic lift decreases and the rotor is decelerated. The main effect of the proposed tangential boundary layer blowing is that the air stream along the blade surface is enhanced, thereby enhancing the aerodynamic lift experience. The required pressure is generated passively using the centrifugal force. The inlet of the pathway is described as an inlet adapted to receive air flowing over the blade surface to augment laminar flow over the blade surface thereby enhancing the aerodynamic lift.

WO 00/50778 discloses a boundary layer control system in which vibrations of a structure, e.g. wind turbine blade, provides pulses of fluid particles from a chamber through a nozzle into the boundary layer of a surface of said structure at frequencies related to the frequencies of vibrations of said structure.

### SUMMARY OF THE INVENTION

The invention has for an object to provide an improved boundary layer control system for wind turbine blades which can be used for multiple purposes, depending on the momentaneous weather conditions and loads acting on wind turbine blades.

This object is achieved by a wind turbine comprising a rotor with turbine blades, and further comprising a boundary layer control system for the turbine blades, wherein a plurality of pressure chambers is located in the blade distributed over the length of the blade, wherein each pressure chamber is in communication with the outside of the blade through one or more corresponding openings in the outer surface of the turbine blade, wherein furthermore a suction channel and a blow channel extend inside the blade for supplying an underpressure and an overpressure respectively to the pressure chamber, each pressure chamber being connected to at least one of said channels through an air passage in which an actively operable valve is located that is connected to a control unit for selectively bringing the pressure chamber into communication with or close it off from said channel(s) so as to blow air out of the pressure chamber or suck air into the pressure chamber through the corresponding opening(s) in the blade surface.

The boundary layer control system for the wind turbine blades provides the ability to locally apply on the blade surface active suction or blowing of air, depending on momentaneous loads acting on the blade. By applying suction, the aerodynamic loads on the blade are locally increased and the lift to drag ratio is increased, by applying blowing normal to the blade surface, the aerodynamic loads are locally decreased.

The boundary layer control system can be integrated in a wind turbine blade and can maximize the energy production of a wind turbine. The boundary layer control system can be installed in a wind turbine blade design using conventional blade profiles, but it can also be integrated in a new blade design using blade profiles which are optimized for the use of the boundary layer control system. As a result of the boundary layer control on a wind turbine blade, the lift to drag ratio of the blade at different wind conditions and/or different angles of attack can be optimized, depending on the operating conditions of the wind turbine. The boundary layer control system can also be used to control the spanwise load distribution on the wind turbine blade. The boundary layer control system can be powered actively by a suction/blowing device, but can also be operated passively using the centrifugal force as a result of the wind turbine blade's rotational movement.

In particular, the boundary layer control system is adapted to apply active suction or blowing substantially perpendicular to the wind turbine blade surface, depending on, preferably measured, momentaneous loads acting on the blade. By applying suction, the aerodynamic loads on the blade are increased and the lift to drag ratio is increased, because the air flow along the blade surface is enhanced. By applying blowing perpendicular to the blade surface, the aerodynamic loads are decreased, because the air flow along the blade surface is locally disturbed. The difference between the induced aerodynamic loads due to maximum suction and the induced aerodynamic loads due to maximum blowing can be used to control the wind turbine blade.

By applying boundary layer suction, the low energy part of the boundary layer closest to the blade surface will be removed, which gives the boundary layer a full velocity profile (high velocities close to the blade surface). Thanks to the full velocity profile, the boundary layer will be able to face a higher unfavorable pressure gradient which means that flow separation can be avoided or moved to a point closer to the trailing edge of the wind turbine blade. A second consequence of the boundary layer suction is that the thickness of the boundary layer decreases. By applying boundary layer blowing normal to the blade surface, controlled separation of the boundary layer from the blade surface can be induced when desired.

All the results of boundary layer control mentioned above can be used for different purposes. First, the effects of boundary layer suction on the overall performance of a wind turbine will be explained. Different advantages are listed below:
- Due to boundary layer suction, thicker blades can be used without inducing early flow separation. Thicker blades have a higher stiffness, which makes it possible to use less material to have the same stiffness as a conventional wind turbine blade. Less material means less production costs and a lower weight. Thanks to the higher stiffness of the thicker blades, more flexible materials can be used for the production of the wind turbine blades. For example, the expensive carbon fibers used for the production of blades could be replaced by cheaper glass fibers. With increasing rotor diameters, high stiffness and low weight of wind turbine blades become more and more important.
- The blade section close to the wind turbine hub is mostly circular to enable pitching of the blade. To avoid a abrupt transition in the blade profile, there is a large spanwise region where the blade profile changes from the ideal profile to the circular profile. In this region, the wind turbine blade does not have an optimal aerodynamic shape, which locally causes early flow separation without the application of suction. By applying boundary layer suction, also the blade section close to the root can become efficient by delivering a higher contribution to the energy production of the wind turbine.
- Postponing or avoiding flow separation by suction means that the maximum lift coefficient of the wind turbine blade can be increased. With a constant maximum acceptable load on the blade, a higher maximum lift coefficient means that the chord length of the blade can be reduced. A blade with a smaller chord length is less sensitive for heavy gusts during operation or even during standstill, which means that less fatigue damage will occur.
- For large high-tech wind turbines, trailing edge noise is the dominant factor in the noise emission. Trailing edge noise is directly dependant on the thickness of the boundary layer at the trailing edge of a wind turbine blade. As the boundary layer thickness can be decreased using boundary layer suction, this technique leads to a lower noise emission. As the maximum tip speed of a wind turbine is limited due to a limit on the noise emission of the turbine, boundary layer suction enables the engineers to design for higher tip speeds. The energy produced by the wind turbine is directly related to the rotation speed. Thus, boundary layer suction enables higher tip speeds and as a consequence, a higher energy production.
- By applying boundary layer suction, flow separation can be postponed or avoided and the boundary layer thickness decreases. As a consequence, the pressure drag of the blade profile will decrease, and the lift coefficient will increase due to the higher effective curvature felt by the air flowing over the blade. Combining these advantages, the lift to drag ratio at a certain angle of attack can be increased significantly. By increasing the lift to drag ratio, the overall performance of the wind turbine is increased.

As already mentioned above, the invention relates to a boundary layer control system which is adapted to apply both active suction and blowing normal to the wind turbine blade surface, depending on the momentaneous loads acting on the blade. By applying both suction and blowing, the aerodynamic force distribution on a wind turbine blade can be controlled, but also the structural loads on a blade can be controlled. Advantages of this active load control system are listed below:
- By applying boundary layer suction, the aerodynamic forces acting on a wind turbine blade can be increased. By blowing air out of the blade surface, flow separation can be induced, which means that the aerodynamic lift forces acting on the blade will decrease. By controlling the local amount of suction and blowing based on local momentaneous measurements of the aerodynamic loads acting locally on the blade or of the displacements of the blade due to the aerodynamic loads, load fluctuations can be avoided. By varying the suction/blowing over the span of the blade, the optimal load distribution over the entire blade can be obtained, avoiding the exceeding of the maximum local strain in the blade material.
- In the high frequency regime, load fluctuations due to wind gusts or due to other varying operational conditions can be counteracted by the boundary layer control system. As a consequence, fatigue loads can be reduced or avoided, thereby reducing the chance on fatigue damages. By reducing load fluctuations on a wind turbine blade, also the loads on the mechanical components of a wind turbine, e.g. the transmission and the bearings, are reduced, which makes it possible to design less strong mechanical components, saving material, weight and costs.
   By creating more constant loads on the wind turbine blades, higher mechanical and electrical efficiencies can be obtained, which increases the nett energy production of the wind turbine.
- In the low frequency regime, changes in the aerodynamic loads due to changing wind conditions can be counteracted by the boundary layer control system. In the design condition, a blade of a wind turbine operates at a local angle of attack at which the local blade profile has its maximum lift to drag ratio. With changing wind speed, the angle of attack of a wind turbine blade changes, which means that the blade is not operating in optimal conditions anymore. Normally, for pitch controlled turbines, the pitch system is used to adapt the blade angle to make sure that the blade is operating again at the optimal local angles of attack. Using a boundary layer control system in stead of a pitch system, suction or blowing can be applied locally on the blade such that the lift to drag ratio at the off-design angles of attack approaches the design lift to drag ratio at every spanwise location on the blade. In this regard, a boundary layer control system can replace a pitch system. Without a pitch system, the flow separation on the spanwise region on a blade where the blade profile changes from the optimal shape to the circular shape can be avoided because no circular profile is needed any more. Moreover, replacing a pitch system with a boundary layer control system will reduce the costs of the wind turbine as a pitch system is an expensive and complex part of the turbine. Alternatively, a boundary layer control system can be combined with a pitch system, reducing the use of the pitch system. In this case, load damages on the pitch system are reduced and the life span of the pitch system is increased.
- At too high wind speeds or in case of failure of the electrical generator of a wind turbine, the high rotational speed of the wind turbine blades should be decreased. This can be done by reducing the angle of attack of the wind turbine blades using pitch control, but again, overspeeds can also be avoided using the boundary layer control system by activating blowing normal to the blade surface.
   As a consequence of the blowing, flow separation will occur gradually, without the instable aerodynamic effects which occur in case of overspeeds at normal stall controlled turbines. Thanks to the flow separation, the aerodynamic forces on the blade will decrease and as a result also the rotational speed of the wind turbine blade will decrease.
   The wind turbine can be made fail safe for overspeeds by designing the valves between the pressure chambers and air channels in such a way that passive blowing occurs when there is an electrical failure. As a consequence no overloading can take place in case of electrical failure or failure of the pitch system.
- The aerodynamic performance of a wind turbine blade is highly dependant on the soiling of the blade surface due to environmental influences. Especially for stall controlled turbines this effect is important as the angle of attack at which flow separation occurs is highly dependant on the soiling of the blade. As a result of the soiling, a thicker boundary layer is created over the blade surface which will separate from the blade surface at a lower angle of attack than without the soiling. This sensitivity for soiling is significantly reduced by influencing the airflow over the wind turbine blade by a boundary layer control system. The boundary layer control system thus avoids fatigue loads due to uncontrolled or unforeseen flow separation.
- Boundary layer suction can be used to assist the start up of a wind turbine. During start up, the velocity of the air flowing over a blade of the wind turbine is relatively low. If the blade is not pitched in such a way that the angle of attack of the blade is small enough, then the airflow will separate from the blade surface and will not generate any lift to assist the start up of the wind turbine. Appling boundary layer suction to the blade, the flow will not separate from the blade surface and consequently the blade will generate a lift force enabling a more efficient start up of the wind turbine.

In all cases, the boundary layer control system can replace a pitch control system. However, for purposes of redundancy, the boundary layer control system can be combined with a pitch system. In this case the boundary layer control system can be used in the operational regime of the wind turbine, using the pitch system for starting up and in emergency cases, e.g. overspeeds.

### BRIEF DESCRIPTION OF THE DRAWINGS

Fig. 1 and Fig. 2 show a possible wind turbine airfoil typical for the application of boundary layer suction,
Fig. 3 shows a rear view of a wind turbine according to the invention,
Fig. 4 shows in more detail a part of a turbine blade of the wind turbine of Fig. 3,
Fig. 5 shows a sectional view in perspective of a turbine blade of the wind turbine of Fig. 3,
Fig. 6 shows a sectional view in perspective of a turbine blade of the wind turbine of Fig. 3, wherein porous surface elements covering pressure chambers are removed,
Fig. 7 shows a sectional view of a turbine blade of the wind turbine of Fig. 3, showing an alternative positioning of the boundary layer control system,
Fig. 8a shows a sectional view of a turbine blade of the wind turbine of Fig. 3, wherein a slot is used as connection between a pressure chamber and the blade surface,
Fig. 8b shows a sectional view of a turbine blade of the wind turbine of Fig. 3, wherein a plurality of slots is used as connection between a pressure chamber and the blade surface,
Fig. 8c shows a sectional view of a turbine blade of the wind turbine of Fig. 3, wherein a slot is used as connection between an air channel and the blade surface without using a pressure chamber,
Fig. 9 shows a rear view in perspective of a wind turbine according to the invention, wherein the air suction channel is open at the tip region of the blade,
Fig. 10 shows a side view of a wind turbine according to the invention with sensors and control unit,
Fig. 11 shows a preferred embodiment of a wind turbine according to the invention,
Fig. 12 shows a detail of the wind turbine of Fig. 11,
Fig. 13a and 13b illustrate suction and blowing of air respectively to/from the blade surface of the turbine of Fig. 11,
Fig, 14 shows another preferred embodiment of a wind turbine according to the invention,
Fig. 15 shows an open tip of the blade of the wind turbine of Fig. 14, and
Fig. 16a - 16c illustrate air suction and air blowing to/from the blade surface of the turbine of Fig. 14.

### DETAILED DESCRIPTION

The invention has for an object to provide an improved boundary layer control system for wind turbine blades which can be used for multiple purposes, depending on the momentaneous weather conditions and loads acting on wind turbine blades.

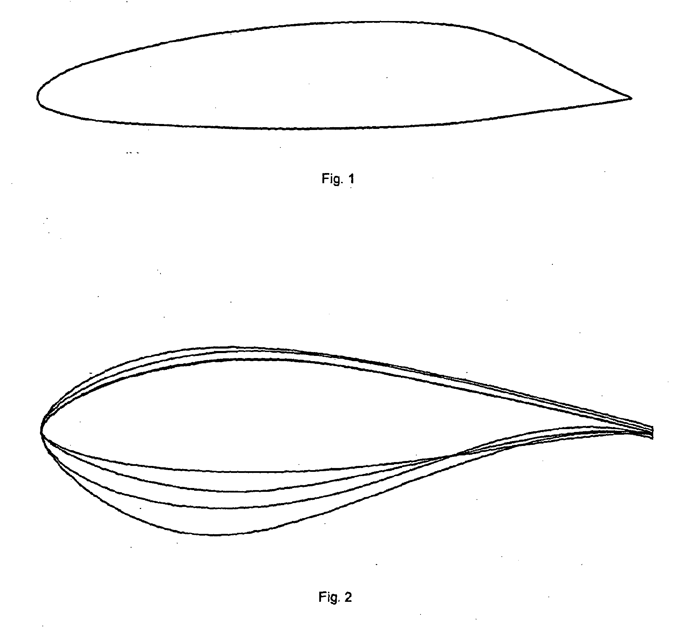

The boundary layer control system can be installed in a wind turbine blade design using conventional blade profiles, but it can also be integrated in a new blade design using blade profiles which are optimized for the use of the boundary layer control system (Figures 1 and 2).

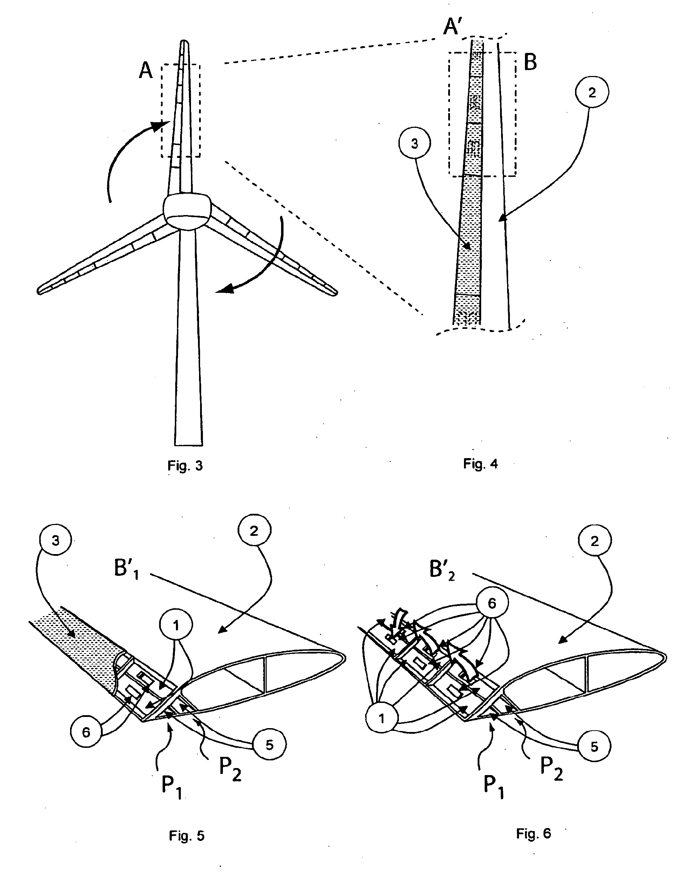

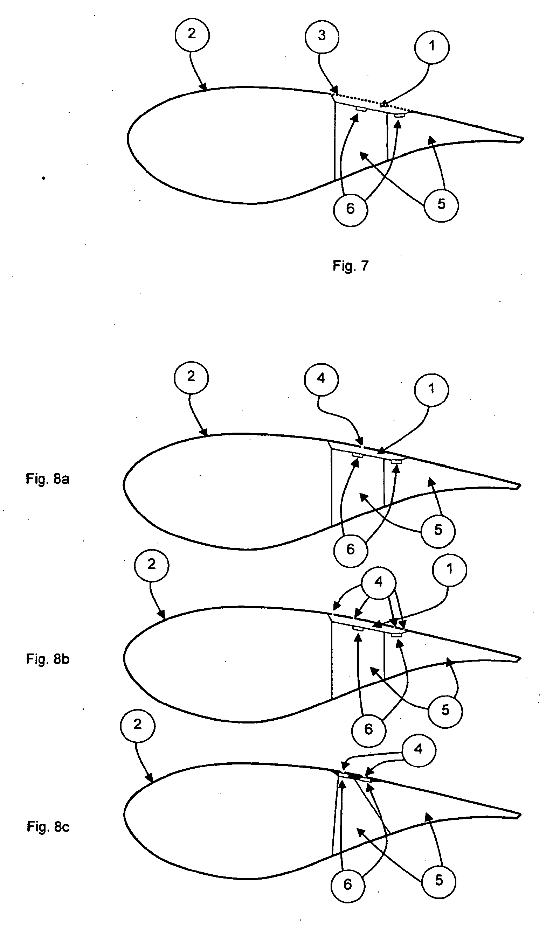

The boundary layer control system comprises a plurality of pressure chambers, indicated by reference numeral 1 in Figures 5, 6, 7 and 8, situated below the surface of the extrados (the rear side or suction side) of blade 2 (see Figures 4, 5, 6, 7, 8, 9, 12, 13 and 15), the surface material being partially replaced by a porous material 3 (shown in Figures 4, 5, 7, 8, 9, 12, 13 and 15). The pressure chamber 1 is a cavity in the wind turbine blade just underneath the blade surface, this surface possibly replaced by a porous material 3, through which air can be flowing in different directions. Preferably, a pressure chamber has a relatively small volume to avoid a lag in response when changing from suction to blowing at the same location. As an alternative for the porous upper surface of the blade, one or more slots 4 (see Figure 8) can be installed in the blade to connect the pressure chambers to the blade surface.

The pressure chambers are connected to one or more air channels 5 (see Figures 5, 6, 7 and 8) with constant or variable cross section which are installed into the blade. An air channel transports air in spanwise direction through the wind turbine blade, between an opening at the wind turbine blade root or tip on one side, and one or more pressure chambers and/or porous system surfaces on the other side. In a specific embodiment, one or more pressure chambers can take over the function of an air channel.

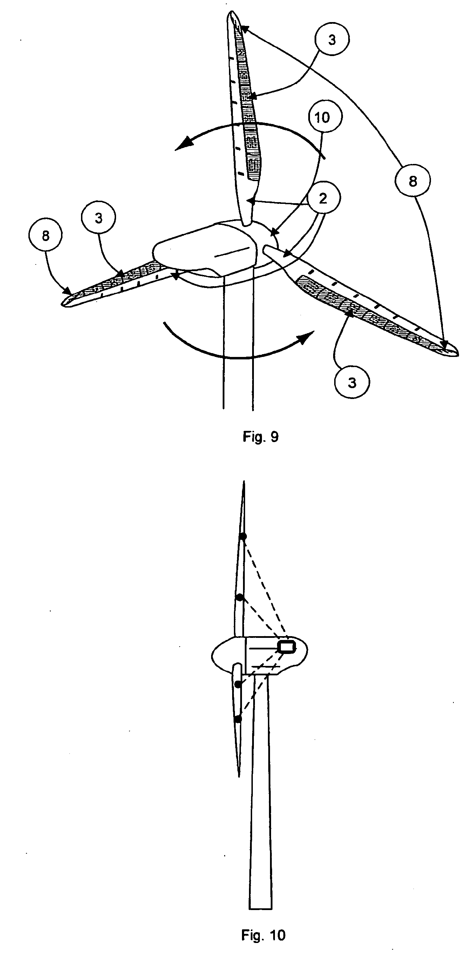

The connection between the pressure chambers and the air channels consists of one or more devices 6 or valves (see Figures 5, 6, 7 and 8) which control the flow rate from the pressure chambers to the air channels or in the opposite direction. The flow rate control is based on a mathematical model or it is based on local and instantaneous measurements of the aerodynamic loads acting on the blade or of the deflections of a blade due to the aerodynamic loads or of the strains in the blade material due to the aerodynamic loads. The mathematical model can be a function of the rotational speed of the wind turbine blade, of the wind speed, of the blade angle of attack, of the instantaneous power produced by the wind turbine, of the instantaneous torque on the shaft of the turbine and/or of a device which enables the prediction of wind gusts. The principle of measuring the local blade displacements is shown in Figure 10.

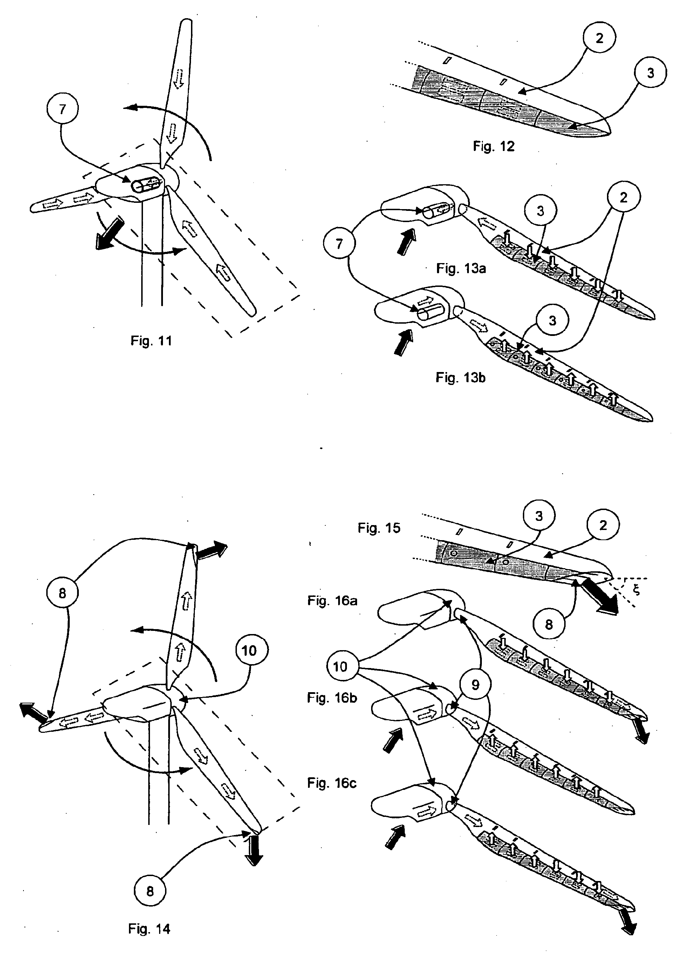

In one embodiment of the system, the air channels (part 5) lead to one or more suction/blowing devices 7 (see Figures 11 and 13), generating the desired pressures to apply suction and/or blowing at the wind turbine blade surface. The principle of suction/blowing through a suction/blowing device is shown in Figure 13.

In an other embodiment of the system, the centrifugal force as a result of the blade's rotational movement is used to generate the desired pressures in the channels. In this case, one air channel 5 lead to an opening at the blade tip 8 (see Figures 9, 14 and 15) in order to generate a low pressure into the channel, and one channel 5 lead to an opening at the blade root 9 (shown in Figure 16) in order to generate a high pressure into the channel. This opening at the blade root can be an internal opening to the rotor hub 10 (see Figures 9, 14 and 16). The principle of suction/blowing using the centrifugal force is shown in Figure 16.

The two embodiments mentioned above can also be combined into a new embodiment. In all embodiments, it is possible to create an airflow through the rotor hub 10 due to the air flowing out of the blade or flowing into the blade. The airflow through the rotor hub cools the transmission and the electronics situated in the rotor hub.

In the preferred embodiment of the boundary layer control system, the pressure chambers 1 are connected to two different air channels 5 through flow regulating devices/valves 6. One air channel contains air at a variable pressure which is locally higher than the pressure acting on the outer surface of the system (porous surface or slot(s)) at the same spanwise location. The relatively high pressures in the channel can be realized actively by a suction/blowing device 7, or it can be realized passively by creating a connection between the air channel and the air inside the rotor hub 10 or outside the wind turbine at the blade root, using the centrifugal forces. The opening between the blade root and the hub or the outside can be fixed but can also be variable. The other air channel contains air at a variable pressure which is locally lower than the pressure acting on the outer surface of the system (porous surface or slot(s)) at the same spanwise location. The relatively low pressures in the channel can be realized actively by a suction/blowing device 7, or it can be realized passively by creating a connection between the air channel and the air outside the wind turbine at the blade tip 8, using the centrifugal forces. The shape of the opening at the blade tip 8 and the blow velocity and the blow angle at the tip opening can be fixed or variable, in order to minimize the creation of drag and/or noise due to the air leaving the low pressure air channel. By controlling the flow regulating devices/valves 6, the pressure chambers 1 underneath the porous blade surface 3 or underneath the slot(s) 4 are connected to the low pressure channel or to the high pressure channel, creating suction or blowing at the blade surface 2 respectively. Also the amount of suction/blowing is controlled by the flow regulating devices/valves 6.

## Claims

1. Wind turbine comprising a rotor with a hub (10) and turbine blades (2) and further comprising a boundary layer control system for the turbine blades, wherein a plurality of pressure chambers (1) is located in the blade distributed over the length of the blade, wherein each pressure chamber is in communication with the outside of the blade through one or more corresponding openings (4) in the outer surface of the turbine blade, **characterized in that** furthermore a suction channel (8) and a blow channel (5) extend inside the blade for supplying an underpressure and an overpressure respectively to the pressure chamber, each pressure chamber being connected to at least one of said channels through an air passage in which an actively operable valve (6) is located that is connected to a control unit for selectively bringing the pressure chamber into communication with or close it off from said channel(s) so as to blow air out of the pressure chamber or suck air into the pressure chamber through the corresponding opening(s) in the blade surface.

2. Wind turbine according to claim 1, wherein the openings in the outer surface of the blade are arranged such that if in use air is blown out of them, an air flow along the blade surface is disturbed.

3. Wind turbine according to claim 1 or 2, wherein the openings in the outer surface of the blade are arranged such that in use the air flows into or out of the pressure chamber in a direction substantially perpendicular to the outer surface at that location.

4. Wind turbine according to any one of the preceding claims, wherein the openings in the outer surface are provided at the extrados (rear side or suction side) of the blade in the region at the trailing edge.

5. Wind turbine according to any one of the preceding claims, wherein the outer surface where the openings are located is formed by a porous structure (3) such that the openings are constituted by pores of the porous structure.

6. Wind turbine according to any one of the preceding claims, wherein measurement means are provided on the turbine blades, which are connected to the control unit and are adapted to measure deflections of the blades and strains in the blade material in order to determine the load conditions of the turbine blade.

7. Wind turbine according to any one of the preceding claims, wherein the valves are flow regulating valves.

8. Wind turbine according to any of the preceding claims, wherein the valves between the pressure chamber(s) and channels are designed in such a way that passive blowing occurs in case of electrical failure or failure of a possibly present pitch system.

9. Wind turbine according to any one of the preceding claims, wherein the suction channel is connected to a suction device (7).

10. Wind turbine according to any one of the preceding claims, wherein the blow channel is connected to a blowing device (7).

11. Wind turbine according to any one of the claims 1-9, wherein the blow channel is open ended at a region (9) at the rotor hub so as to create upon rotation of the rotor an overpressure in the blow channel through a centrifugal force.

12. Wind turbine according to any one of the claims 1-8, 10 and 11, wherein the air suction channel is open at the tip (9) region of the blade so as to create upon rotation of the rotor an underpressure in the suction channel through a centrifugal force.

13. Wind turbine according to claim 12, wherein at the tip region of the blade the opening, the blow velocity and/or the blow angle can be fixed or variable, in order to minimize the creation of drag and/or noise due to the air leaving the suction channel.

14. Wind turbine according to any one of the preceding claims, wherein air entering the blowing channel from the rotor hub or exiting the suction channel into the rotor hub is lead as a cooling fluid over electronic and mechanical components situated in the turbine, e.g. a transmission, an alternator and/or a controller.

15. Wind turbine according to any one of the preceding claims, wherein the pressure chambers have such a small volume that a lag in response is avoided when changing from suction to blowing and vice versa.

16. Wind turbine according to any of the preceding claims wherein the boundary layer control system is combined with a pitch control system of the blades.

17. Method for controlling the load on a wind turbine blade, wherein a wind turbine according to any one of the preceding claims is used.

18. Method according to claim 17, wherein the control of the valves is based on a mathematical model, which can be a function of the rotational speed of the wind turbine blade, of the wind speed, of the blade angle of attack, of the instantaneous power produced by the wind turbine, of the instantaneous torque on the shaft of the turbine and/or of a device which enables the prediction of wind gusts.

19. Method according to claim 17, wherein strains in the blade material due to the aerodynamic loads acting on the turbine blade are measured on one or more locations on the blade and the opening of the valves is instantaneously controlled based on the local measurements of the strains in the blade material.

20. Method according to claim 17, wherein deflections of the turbine blade due to the aerodynamic loads acting on the blade are measured on one or more locations and the opening of the valves is instantaneously controlled based on the local measurements of the deflections of the turbine blade.

## Patentansprüche

1. Windkraftanlage, enthaltend einen Rotor mit einer Nabe (10) und Rotorblättern (2) und ferner enthaltend ein Grenzschichtsteuerungssystem für die Rotorblätter, wobei eine Vielzahl von Druckkammern (1) über die Länge des Blattes verteilt in dem Blatt angeordnet ist, wobei jede Druckkammer durch eine oder mehrere entsprechende Öffnungen (4) in der äußeren Oberfläche des Rotorblatts mit der Außenseite des Blattes in Verbindung steht, **dadurch gekennzeichnet, dass** ferner ein Saugkanal (8) und ein Blaskanal (5) im Inneren des Blattes verlaufen, um der Druckkammer einen Unterdruck bzw. einen Überdruck zuzuführen, wobei jede Druckkammer mit mindestens einem der Kanäle durch einen Luftkanal verbunden ist, in welchem ein aktiv betätigbares Ventil (6) angeordnet ist, welches mit einer Steuereinheit verbunden ist, um die Druckkammer selektiv mit dem Kanal bzw. den Kanälen in Verbindung zu setzen oder von diesen zu trennen, um so durch die entsprechende(n) Öffnung(en) in der Blattoberfläche aus der Druckkammer Luft auszublasen oder Luft in die Druckkammer anzusaugen.

2. Windkraftanlage nach Anspruch 1, bei welcher die Öffnungen in der äußeren Oberfläche des Blattes dergestalt angeordnet sind, dass dann, wenn während des Betriebs aus ihnen Luft ausgeblasen wird, eine Luftströmung entlang der Blattoberfläche gestört wird.

3. Windkraftanlage nach Anspruch 1 oder 2, bei welcher die Öffnungen in der äußeren Oberfläche des Blattes dergestalt angeordnet sind, dass während des Betriebs die Luft in einer zu der äußeren Oberfläche an dieser Stelle im Wesentlichen senkrechten Richtung in die Druckkammer oder aus der Druckkammer strömt.

4. Windkraftanlage nach einem der vorstehenden Ansprüche, bei welcher die Öffnungen in der äußeren Oberfläche an dem Rücken (Rückseite oder Saugseite) des Blattes im Bereich der hinteren Kante angeordnet sind.

5. Windkraftanlage nach einem der vorstehenden Ansprüche, bei welcher die äußere Oberfläche dort, wo die Öffnungen angeordnet sind, aus einer porösen Struktur (3) gebildet ist, so dass die Öffnungen durch Poren der porösen Struktur gebildet sind.

6. Windkraftanlage nach einem der vorstehenden Ansprüche, bei welcher Messeinrichtungen an den Rotorblättern vorgesehen sind, welche mit der Steuereinheit verbunden sind und dafür ausgelegt sind, Auslenkungen der Blätter und Belastungen in dem Blattmaterial zu messen, um die Belastungsbedingungen des Rotorblatts zu bestimmen.

7. Windkraftanlage nach einem der vorstehenden Ansprüche, bei welcher die Ventile Durchflussregelventile sind.

8. Windkraftanlage nach einem der vorstehenden Ansprüche, bei welcher die Ventile zwischen der bzw. den Druckkammer(n) und den Kanälen so konstruiert sind, dass im Fall eines Stromausfalls oder des Ausfalls eines gegebenenfalls vorhandenen Steigungssystems ein passives Blasen erfolgt.

9. Windkraftanlage nach einem der vorstehenden Ansprüche, bei welcher der Saugkanal mit einer Saugvorrichtung (7) verbunden ist.

10. Windkraftanlage nach einem der vorstehenden Ansprüche, bei welcher der Blaskanal mit einer Blasvorrichtung (7) verbunden ist.

11. Windkraftanlage nach einem der Ansprüche 1-9, bei welcher der Blaskanal in einem Bereich (9) an der Rotornabe ein offenes Ende hat, um so bei der Rotation des Rotors durch eine Zentrifugalkraft einen Überdruck in dem Blaskanal zu erzeugen.

12. Windkraftanlage nach einem der Ansprüche 1-8, 10 und 11, bei welcher der Luftsaugkanal im Bereich der Blattspitze (8) offen ist, um so bei der Rotation des Rotors durch eine Zentrifugalkraft einen Unterdruck in dem Saugkanal zu erzeugen.

13. Windkraftanlage nach Anspruch 12, bei welcher im Bereich der Blattspitze die Öffnung, die Blasgeschwindigkeit und/oder der Blaswinkel fest oder variabel sein können, um die durch die aus dem Saugkanal austretende Luft bedingte Erzeugung von Strömungswiderstand und/oder Geräuschen zu minimieren.

14. Windkraftanlage nach einem der vorstehenden Ansprüche, bei welcher in den Blaskanal von der Rotornabe eintretende Luft oder aus dem Saugkanal in die Rotornabe austretende Luft als Kühlfluid über in der Turbine angeordnete elektronische und mechanische Bauteile geleitet wird, beispielsweise ein Getriebe, einen Generator und/oder eine Steuereinrichtung.

15. Windkraftanlage nach einem der vorstehenden Ansprüche, bei welcher das Volumen der Druckkammern so klein ist, dass beim Wechsel von Saugen auf Blasen und umgekehrt eine Ansprechverzögerung vermieden wird.

16. Windkraftanlage nach einem der vorstehenden Ansprüche, bei welcher das Grenzschichtsteuerungssystem mit einem Steigungssteuersystem der Blätter kombiniert ist.

17. Verfahren zur Steuerung der Belastung eines Blattes einer Windkraftanlage, bei welchem eine Windkraftanlage nach einem der vorstehenden Ansprüche verwendet wird.

18. Verfahren nach Anspruch 17, bei welchem die Steuerung der Ventile auf einem mathematischen Modell basiert, welches eine Funktion der Rotationsgeschwindigkeit des Rotorblatts, der Windgeschwindigkeit, des Anstellwinkels des Blattes, der momentan von der Windkraftanlage erzeugten Leistung, des momentanen Drehmoments an der Turbinenwelle und/oder einer Vorrichtung, die die Vorhersage von Windböen ermöglicht, ist.

19. Verfahren nach Anspruch 17, bei welchem Belastungen in dem Blattmaterial aufgrund der auf das Rotorblatt wirkenden aerodynamischen Lasten an einer oder mehreren Stellen des Blattes gemessen werden und die Öffnung der Ventile auf der Grundlage der lokalen Messungen der Belastungen des Blattmaterials unverzüglich gesteuert wird.

20. Verfahren nach Anspruch 17, bei welchem Auslenkungen des Rotorblattes aufgrund der auf das Blatt wirkenden aerodynamischen Lasten an einer oder an mehreren Stellen gemessen werden und die Öffnung der Ventile auf der Grundlage der lokalen Messungen der Ablenkungen des Rotorblattes unverzüglich gesteuert wird.

## Revendications

1. Eolienne comprenant un rotor avec un moyeu (10) et des pales de turbine (2), et comprenant en outre un système de commande de couche limite pour les pales de turbines, dans laquelle une pluralité de chambres de pression (1) sont situées dans la pale en étant distribuées le long de la pale, dans laquelle chaque chambre de pression est en communication avec l'extérieur de la pale à travers une ou plusieurs ouvertures correspondantes (4) dans la surface extérieure de la pale de turbine, **caractérisée en ce qu'**en outre un canal d'aspiration (8) et un canal de refoulement (5) s'étendent à l'intérieur de la pale pour fournir respectivement une sous-pression et une sur-pression à la chambre de pression, chaque chambre de pression étant reliée à au moins un desdits canaux par un passage d'air dans lequel est située une vanne (6) pouvant fonctionner activement qui est connectée à une unité de commande pour, de manière sélective, connecter la chambre de pression avec ledit(ledits) canal(aux) ou la déconnecter dudit(desdits) canal(aux) de sorte à refouler de l'air hors de la chambre de pression ou aspirer de l'air dans la chambre de pression à travers l'(les) ouverture(s) dans la surface de la pale.

2. Eolienne selon la revendication 1, dans laquelle les ouvertures dans la surface extérieure de la pale sont agencées de sorte à ce que si, pendant utilisation, de l'air est refoulé hors d'elles, un flux d'air le long de la pale est perturbé.

3. Eolienne selon la revendication 1 ou 2, dans laquelle les ouvertures dans la surface extérieure de la pale sont agencées de sorte à ce que, pendant utilisation, l'air circule en direction ou en provenance de la chambre de pression dans une direction sensiblement perpendiculaire à la surface extérieure à cet emplacement.

4. Eolienne selon l'une quelconque des revendications précédentes, dans laquelle les ouvertures dans la surface extérieure sont équipées au niveau des extrados (côté arrière ou côté aspiration) de la pale dans la région du bord de fuite.

5. Eolienne selon l'une quelconque des revendications précédentes, dans laquelle la surface extérieure au niveau de laquelle les ouvertures sont situées est formée par une structure poreuse (3) de sorte que les ouvertures sont constituées par des pores de la structure poreuse.

6. Eolienne selon l'une quelconque des revendications précédentes, dans laquelle des moyens de mesure sont prévus sur les pales de turbine, lesquels sont reliés à l'unité de commande et sont adaptés pour mesurer des déflections des pales et des contraintes dans le matériau des pales de sorte à déterminer les conditions de charge de la pale de turbine.

7. Eolienne selon l'une quelconque des revendications précédentes, dans laquelle les vannes sont des vannes de régulation de flux.

8. Eolienne selon l'une quelconque des revendications précédentes, dans laquelle les vannes entre la(les) chambre(s) de pression et les canaux sont conçues de telle sorte qu'un soufflage passif se produit en cas de défaillance électrique ou de défaillance dans un éventuel système de pas présent.

9. Eolienne selon l'une quelconque des revendications précédentes, dans laquelle le canal d'aspiration est relié à un dispositif d'aspiration (7).

10. Eolienne selon l'une quelconque des revendications précédentes, dans laquelle le canal de refoulement est relié à un dispositif de refoulement (7).

11. Eolienne selon l'une quelconque des revendications 1 à 9, dans laquelle le canal de refoulement est ouvert à une extrémité au niveau d'une région (9) au niveau du moyeu du rotor de sorte à créer lors de la rotation du rotor une surpression dans le canal de refoulement grâce à une force centrifuge.

12. Eolienne selon l'une quelconque des revendications 1 à 8, 10 et 11, dans laquelle le canal d'aspiration d'air est ouvert au niveau de la région de pointe (8) de la pale de sorte à créer lors de la rotation du rotor une sous-pression dans le canal d'aspiration grâce à une force centrifuge.

13. Eolienne selon la revendication 12, dans laquelle au niveau de la région de pointe de la pale, l'ouverture, la vitesse de soufflage et/ou l'angle de soufflage peut être fixe ou variable, de sorte à minimiser la création de trainée et/ou de bruit dû à l'air quittant le canal d'aspiration.

14. Eolienne selon l'une quelconque des revendications précédentes, dans laquelle l'air entrant dans le canal de refoulement depuis le moyeu du rotor ou sortant du canal d'aspiration dans le moyeu du rotor est conduit comme un fluide de refroidissement sur les composants électroniques et mécaniques situés dans la turbine, par exemple une transmission, un alternateur et/ou une commande.

15. Eolienne selon l'une quelconque des revendications précédentes, dans laquelle les chambres de pression ont un volume tellement petit qu'on évite un retard de réponse lorsque l'on passe de l'aspiration au refoulement et inversement.

16. Eolienne selon l'une quelconque des revendications précédentes, dans laquelle le système de commande de couche limite est combiné avec un système de commande du pas des pales.

17. Méthode pour commander la charge sur une pale d'éolienne, dans laquelle on utilise une éolienne selon l'une quelconque des revendications précédentes.

18. Méthode selon la revendication 17, dans laquelle la commande des vannes est basée sur un modèle mathématique, lequel peut être une fonction de la vitesse de rotation de la pale d'éolienne, de la vitesse du vent, de l'angle d'attaque de la pale, de la puissance instantanée produite par l'éolienne, du couple instantané sur l'arbre de la turbine et/ou d'un dispositif qui permet la prédiction de turbulences du vent.

19. Méthode selon la revendication 17, dans laquelle des contraintes dans le matériau de la pale dues aux charges aérodynamiques agissant sur la pale d'éolienne sont mesurées à un ou plusieurs emplacements sur la pale et l'ouverture des vannes est commandée instantanément en fonction des mesures locales des contraintes dans le matériau de la pale.

20. Méthode selon la revendication 17, dans laquelle des déformations de la pale d'éolienne dues aux charges aérodynamiques agissant sur la pale sont mesurées à un ou plusieurs emplacements et l'ouverture des vannes est commandée instantanément en fonction de mesures locales des déformations de la pale d'éolienne.
